# EUROPÄISCHE PATENTSCHRIFT

(11) **EP 1 142 428 B1**
(45) Veröffentlichungstag und Bekanntmachung des Hinweises auf die Patenterteilung: **12.07.2006**
(21) Anmeldenummer: 99973452.8
(22) Anmeldetag: 18.10.1999
(51) Int. Cl.: H04Q 7/38

(54) **VERFAHREN ZUM ROUTEN VON NACHRICHTEN IN MINDESTENS EINEM TELEKOMMUNIKATIONSNETZ NACH GSM-STANDARD**
METHOD FOR ROUTING MESSAGES IN AT LEAST ONE TELECOMMUNICATIONS NETWORK ACCORDING TO GSM STANDARD
METHODE POUR DIRIGER DES MESSAGES DANS AU MOINS UN RESEAU DE TELECOMMUNICATION EN FUNCTION DU STANDARD GSM

(30) Priorität: 21.12.1998 DE 19859081
(43) Veröffentlichungstag der Anmeldung: 10.10.2001
(73) Patentinhaber: E-Plus Mobilfunk GmbH, 12349 Berlin (DE)
(72) Erfinder: BRÜNIG, Roger, 40479 Düsseldorf (DE); DIERKES, Katharina, 45259 Essen (DE); HÜWELS, Armin, 45133 Essen (DE); MÜLLER, Christian, D-40477 Düsseldorf (DE); REICH, Michael, 40477 Düsseldorf (DE); SUNDERMANN, Ulrich, 8308 Illnau (CH)
(74) Vertreter: Beyer, Rudi
(86) Internationale Anmeldenummer: PCT/EP1999/007884
(87) Internationale Veröffentlichungsnummer: WO 2000/038458

(56) Entgegenhaltungen:
- WO-A-98/28920
- WO-A-98/44640
- DE-C- 19 515 558
- ROBERTS G: "THE ELEMENTS AND DESCRIPTION OF A NUMBER PORTABILITY ADMINISTRATIONCENTER SERVICE MANAGEMENT SYSTEM (NPAC SMS)" ANNUAL REVIEW OF COMMUNICATIONS, 1. Januar 1998 (1998-01-01), XP000793203

## Beschreibung

### Gattung

Die Erfindung betrifft ein Verfahren zum Routen von Nachrichten in mindestens einem Telekommunikationsnetz nach GSM-Standard mit einem oder mehreren Netzelementen mit teilnehmerspezifischen Daten.

### Stand der Technik

In GSM-Mobilfunknetzen werden die Teilnehmerdaten für den Mobilfunkteilnehmer in einer zentralen Datenbank gehalten, dem Home Location Register (HLR). Bei steigender Teilnehmerzahl und dem damit steigenden Rufnummernbedarf werden die Zusammenhänge zwischen HLR-, SIM-Karten- und VMSC-Planung durch die notwendige Blockbildung von Rufnummern und deren Aufteilung auf die HLR und VMSC's erheblich komplexer. Das durch die Wunschrufnummer erschwerte Planungsprinzip, unter Berücksichtigung der Blockbildung für MSISDN und IMSI, stößt bei steigender Komplexität an seine Leistungsgrenzen. Aufgrund von systemtechnisch bedingten Kapazitätsgrenzen eines HLR gibt es in Mobilfunknetzen mit hoher Teilnehmerzahl in der Regel mehr als ein HLR, um die Daten aller Teilnehmer aufzunehmen. Die Festlegung, in welchem HLR der jeweilige Teilnehmerdatensatz hinterlegt wird, wird anhand der Rufnummern der Mobilfunkteilnehmer (MSISDN-Mobile Station ISDN Number) oder deren IMSI bestimmt (die Festlegung muß einmalig zu Netzstart getroffen werden).

Neben den HLR gibt es noch andere Netzelemente, die teilnehmerspezifische Daten enthalten, wie z. B. die Service Control Points (SCP) mit integrierter Service Data Function (SDF) im Intelligent Network (IN) oder die Voice Mail Service Centre (VMSC's) als zentrale Anrufbeantworter im Vermittlungsnetz.

Da in den HLR alle GSM-Teilnehmerdaten gespeichert werden und ein Teilnehmer über seine MSISDN (z. B. beim MTC) oder über seine IMSI (z. B. beim Location Update) identifiziert wird, muß z.B. das MSC/VLR das HLR des Teilnehmers anhand der MSISDN bzw. IMSI ermitteln können. Aufgrund von Kapazitäts- und Administrationsgrenzen können nicht alle individuellen Rufnummern und IMSls in der MSC-Routingtabelle hinterlegt werden. Es werden daher - wie erwähnt - Blöcke definiert, die jeweils einem bestimmten HLR zugeordnet sind und für die das Routing entsprechend in der MSC eingerichtet ist. Da auf den SIM-Karten die individuelle IMSI des jeweiligen Teilnehmers einprogrammiert ist, muß die Kombination SIM-Karte/Rufnummer bei der Teilnehmeraktivierung zusammenpassen und demselben HLR zugeordnet sein. Ist dies nicht der Fall, entstehen sogenannte virtuelle Teilnehmereinträge im HLR, für die nur begrenzt Kapazität zur Verfügung steht.

Eine Abschätzung der voraussichtlichen Entwicklung der Teilnehmerverteilung auf HLR, aufgeteilt in reale und virtuelle Teilnehmer, wird mit wachsender Zahl der Teilnehmer und/oder HLR immer schwieriger. Verschärft kann die Situation dadurch werden, daß z. B. eine weitere Netzkennzahl eingeführt wird.

Durch das Wunschrufnummemangebot kommt erschwerend hinzu, daß bereits der gesamte zur Aktivierung verfügbare Rufnummemraum in den MSCs eingerichtet und auf die bestehenden HLR aufgeteilt ist. Hierauf sind die HLR-Splits zurückzuführen: Bei Inbetriebnahme eines neuen HLR müssen auch diesem Rufnummern- und IMSI-Bereiche zugeteilt werden, damit in diesem neuen HLR Teilnehmer aktiviert werden können.

Die oben beschriebenen Zuordnungen prägen den HLR-Rollout genauso wie die Rufnummern-Zuteilung und die Voice Mail Service Centre (VMSC)-Numerierungsplanung. Hieraus erwächst nicht nur ein immenser Planungsaufwand, sondern auch eine hohe Fehleranfälligkeit. Außerdem resultiert daraus zusätzlich noch eine Vergeudung von HLR-Kapazität.

Ähnliche Überlegungen wie sie im Zusammenhang mit dem HLR angestellt wurden, können sich auch für andere Netzelemente mit teilnehmerspezifischen Daten ergeben. So wie im HLR die Teilnehmerdaten für GSM-Dienste gespeichert sind, werden im Service-Control-Point (SCP) beispielsweise die Teilnehmerdaten für die Intelligent Network-Dienste eines Teilnehmers abgelegt.

Aus GSM 03.02 (ETS 300 522) betreffend "European digital cellular telecommunications system (Phase 2); Network architecture" des European Telecommunications Standards Institute (ETSI) ist die sogenannte "Netzarchitektur" des Global System for Mobile Communications (GSM) und damit das Digital Cellular Telecommunications System beschrieben. Die GSM 03.04 (ETS 300 524) betrifft "European digital cellular telecommunications system (Phase 2); Signalling requirements relating to routeing of calls to mobile subscribers". Diese Druckschrift betrifft ebenfalls Standards der ETSI.

Zum Stand der Technik gehört ferner die GSM 09.02 (ETS 300 599) betreffend "European digital cellular telecommunications system (Phase 2); Mobile Application Part (MAP) specification", die ebenfalls auf die ETSI zurückgeht. Die GSM 03.12 (ETS 300 530) betrifft European digital cellular telecommunications system (Phase 2); Location registration procedures", die ebenfalls auf die ETSI zurückgeht. Die verwendeten Abkürzungen und Bezeichnungen gehen auf diese Normen zurück.

Aus der DE 195 15 558 C1 ist ein Verfahren zum Aufbau einer Anrufverbindung für Anrufe an einen Funkteilnehmer vorbekannt, wobei bei Empfang einer Aufenthaltsabfrage (SRI) eine zentrale Teilnehmerdatenbasis (HLR) im Heimat-Mobilfunknetz des Funkteilnehmers überprüft, ob die abfragende Vermittlungseinrichtung (GMSC1) das gesamte Dienstespektrum unterstützen kann. Bei negativem Prüfungsergebnis wird eine Anfrage (PRN) gesendet, wobei die Sendung eine Zusatzinformation (RRI) und die Funkteilnehmerrufnummer (MSISDN) des angerufenen Funkteilnehmers enthält. Diese Sendung wird an eine dezentrale Teilnehmerdatenbasis (VLR 2) gesendet, die zu einer das Dienstespektrum unterstützenden und zum Empfang ankommender Anrufe vorgesehenen Mobilvermittlungsstelle (GMSC2) gehört. Beide Informationen werden in der dezentralen Teilnehmerdatenbasis (VLR2) gespeichert, die als Antwort auf die Anfrage (PRN) eine Mobilitätsnummer (MSRN) mit einem Verweis auf die gespeicherten Informationen zurücksendet. Sobald eine den Aufbau der Anrufverbindung auslösende Nachricht (IAM) mit der auf die Zusatzinformation (RRI) verweisenden Mobilitätsnummer (MSRN) im Heimat-Mobilfunknetz empfangen wird, richtet die Mobilvermittlungsstelle (GMSC2) eine zweite Aufenthaltsabfrage (SRI) mit der gespeicherten Funkteilnehmerrufnummer an die zentrale Teilnehmerdatenbasis. Mit der auf die erneute Aufenthaltsabfrage bereit gestellten Mobilitätsnummer wird von der Mobilvermittlungsstelle die Anrufverbindung aufgebaut. Somit kann ein Teilnehmer nach diesem Verfahren, einerlei, in welchem Netz er sich aufhält, seine spezifischen Dienste nutzen. Die Auswahl der Systeme, zu denen die Verbindung aufgebaut wird, erfolgt anhand des angeforderten Dienstes/-Dienstespektrum und nicht aufgrund des individuellen Teilnehmers, identifiziert zum Beispiel durch seine IMSI.

Aus der WO 98/44640 A ist es bekannt, Kurzmitteilungen aus einem Mobilität unterstützenden Paket-Radio-Netz (GPRS) zu versenden. Nicht erkennbar ist, wie durch das Verfahren das HLR bzw. das SMSC ausgewählt oder gefunden wird und wie damit das Routing zu diesen Netzelementen/Systemen realisiert werden kann. Das Verfahren beschreibt unter anderem, wie die SMS überhaupt aus den beschriebenen Paketdatennetzen gesendet und empfangen werden kann mittels Einfügen entsprechender Parameter in den Signalisierungsnachrichten und im HLR.

Aus der WO 98/28920 ist das Weiterleiten von Kurzmitteilungen (SMS) an Intelligente Netze (IN) vorbekannt, wenn der rufende oder angerufene Teilnehmer einem IN-Dienst zugehörig ist und eine IN-Unterstützung für die jeweilige SMS notwendig ist. Im Dokument ist aber keine Funktionalität beschrieben, wie das zuständige SMSC bzw. der SCP ausfindig gemacht werden kann. Vielmehr soll mit dem vorbekannten Verfahren unter anderem der Versand von SMS im privaten Numerierungsplan (PNP) ermöglicht werden, wobei bei der gesendeten Kurzmitteilung festgestellt wird, daß für diese SMS ein IN-Dienst nötig ist, der dann die Kurzwahl in Langwahl wandelt.

### Aufgabe

Der Erfindung liegt die Aufgabe zugrunde, ein Verfahren der gattungsgemäß vorausgesetzten Art dahingehend weiterzuentwickeln, daß bei wenigstens einem Telekommunikationsnetz nach GSM-Standard eine Entkopplung der HLR-Planung von Rufnummernzuteilungen und SIM-Karten-Abrufen ebenso erfolgt wie eine Entkopplung der Systemdatenerstellung von der MSISDN-/IMSI-Verteilung bei Erhöhung der Netzqualität durch Wegfall der virtuellen Teilnehmereinträge.

Des weiteren liegt der Erfindung die Aufgabe zugrunde, diese Verfahrensweise auf alle teilnehmerspezifischen Daten Bezug nehmenden Elemente wie z.B. HLR, AUC, EIR, VMSC, SMSC und SCP individuell und flexibel auszudehnen.

### Lösung

Die Aufgabe wird durch die in **Patentanspruch 1** wiedergegebenen Merkmale gelöst.

### Weitere erfinderische Ausgestaltungen

Weitere erfinderische Ausgestaltungen sind in den **Patentansprüchen 2 bis 12** wiedergegeben.

### Einige Vorteile

Als neues Netzelement hat das als Routingrechner ausgebildete Network Address Register in einem Telekommunikationsnetz, beispielsweise in einem Mobilfunknetz, primär die Aufgabe, eine individuelle Zuordnung von Telekommunikationsteilnehmem, beispielsweise von Mobilfunkteilnehmern zu den betreffenden Netzelementen, beispielsweise zu HLR, zu ermöglichen. Dadurch entfällt die bisher notwendige Blockbildung von Rufnummern und deren Aufteilung, zum Beispiel auf die HLR, da sie durch das NAR aufgehoben wird.

Durch die prinzipielle Vermeidung von virtuellen HLR-Einträgen, die eine häufige Fehlerquelle im Wirknetz sowie im Teilnehmeraktivierungsumfeld darstellen, wird eine Qualitätssteigerung erzielt.

Bei Anwendung des erfindungsgemäßen Verfahrens kommt es durch das NAR zur Einsparung von Netzelementen, beispielsweise von neuen HLR, durch bessere Kapazitätsausnutzung der bestehenden Netzelemente. Dadurch wird das erfindungsgemäße Verfahren trotz der mit der Verwendung des NAR einhergehenden Investitionen nach kurzer Zeit rentabel. Zusätzliche Einsparungen resultieren aus dem Bereich der Numerierungsplanung und Rufnummernverwaltung sowie der SIM-Kartendistribution, die mit dem NAR wesentlich vereinfacht werden können, und damit effizienter und kostengünstiger werden.

Eine Inkompatibilität zu bestehenden Diensten, Netzelementen und Funktionen in einem Telekommunikationsnetz besteht durch das NAR nicht.

Abhängig von der Strategie für das betreffende Telekommunikationsnetz kann das NAR prinzipiell auch für weitere und gegebenenfalls zukünftige Anwendungen eingesetzt werden, wie zum Beispiel die Realisierung von Mobile Number Portability (MNP).

Da das NAR ein Routing-Rechner ist, wird seine Software den jeweiligen Anforderungen angepaßt.

Die Aufgabe eines NAR besteht somit darin, für eine Nachricht das richtige Netzelement, zum Beispiel ein HLR, zu ermitteln, damit die Nachricht dorthin weitergeleitet werden kann, wo sie benötigt wird, zum Beispiel zum SCP, SMSC, HLR, AUC, EIR, VMSC, ABC, MSCNLR.

Das NAR wird somit in ein bestehendes GSM-Netz integriert, welches um die Netzelemente des Intelligent Network (IN) erweitert ist. Neben den klassischen GSM- und IN-Netzelementen sind auch die Netzelemente für die Mehrwertdienste, wie Kurznachrichtendienst und Anrufbeantworter, zu berücksichtigen.

Eine direkte Signalisierungsbeziehung ist nicht zwischen allen Netzelementen untereinander gegeben.

### Das NAR als Wirknetzelement einer Schnittstelle zum Administrationssystem (AdC)

Das NAR ist als Netzelement direkt zum Beispiel in der Rufaufbauphase bei Mobile Terminating Calls (MTC) eingebunden. Daraus ergeben sich besondere Anforderungen an die Leistungsfähigkeit, um zum Beispiel die Rufaufbauzeiten bei MTCs so wenig wie möglich zu verlängern.

Im Signalisierungsnetz kann das NAR als gedoppeltes zentrales Netzelement eingesetzt werden.

Da das NAR nicht im Vermittlungsnetz, sondern im Signalisierungsnetz eingesetzt ist, werden auch keine Verkehrskanäle über das NAR geführt. Eine Schleifenbildung von Verkehrskanälen tritt somit nicht auf.

Abhängig vom verwendeten Einsatzgebiet, z. B. Routing zum HLR oder optimiertes VMSC-Routing hat das NAR somit die Aufgabe,
a) ein Netzelement zu ermitteln und die jeweilige Nachricht dorthin weiterzuleiten (z. B. MAP Send-Routing-Information zum HLR) oder
b) eine Netzelementaddresse zu ermitteln und diese als Routing-Information an das abfragende System zurückzugeben (z. B. INAP: Initial DP + Connect), damit das abfragende System selbst die Nachricht weiterleiten kann.

Wie erwähnt, soll der Nachrichtenfluß so gestaltet sein, daß die Leistungsfähigkeit des NAR so wenig wie möglich beeinträchtigt wird.

### Die Adressierung in den einzelnen Netzelementen wird wie folgt vorgenommen:

Adressierung basierend auf der IMSI des Teilnehmers:
1:
   - VLR:: MTP: DPC = SPC des NAR, OPC = SPC des VLR
   SCCP: called party number = "IMSI" (E.214; E.212)
   calling party number = VLR-Adresse (E.164)
   Im VLR wird die Global Title Analysis so eingerichtet, daß als DPC immer der SPC des NAR genommen wird.
2:
   - NAR:: MTP: DPC = SPC des HLR, OPC = SPC des NAR
   SCCP: called party number = "IMSI" (E.214; evtl. E.212)
   calling party number = VLR-Adresse (E.164)
   Im NAR wird eine Global Title Translation durchgeführt, die als Resultat den SPC des HLR hat, welcher als neuer DPC eingesetzt wird.
3:
   - HLR:: MTP: DPC = SPC des VLR, OPC = SPC des HLR
   SCCP: called party number = VLR-Adresse (E.164)
   calling party number = HLR-Adresse (E.164)

Diese Mechanismen zur Adressierung sind mit bestehenden Mechanismen in GSM-Mobilfunknetzen vergleichbar.

Adressierung basierend auf der MSISDN des Teilnehmers:
1:
   - VLR:: MTP: DPC = SPC des NAR, OPC = SPC des VLR
   SCCP: called party number = MSISDN (E.164)
   calling party number = VLR-Adresse (E.164)
   Im VLR wird die Global Title Analysis so eingerichtet, daß als DPC immer der SPC des NAR genommen wird.
2.
   - NAR:: MTP: DPC = SPC des HLR, OPC = SPC des NAR
   SCCP: called party number = MSISDN (E.164)
   calling party number = VLR-Adresse (E.164)
   Im NAR wird eine Global Title Translation durchgeführt, die als Resultat den SPC des HLR hat, welcher als neuer DPC eingesetzt wird.
3:
   - HLR:: MTP: DPC = SPC des VLR, OPC = SPC des HLR
   SCCP: =called party number = VLR-Adresse (E.164)
   calling party number = HLR-Adresse (E.164)

Alternativ dazu gibt es aber auch die Möglichkeit, die Nachrichten im NAR bis auf den Application Layer hinauf zu dekodieren und dann anhand der dort gewonnenen Information (IMSI oder MSISDN) das weitergehende Routing durchzuführen.

Da das NAR als einziges Wirknetzelement noch die Zuordnung, auf welchem physikalischen Netzelement sich teilnehmerspezifische Daten befinden, zum Beispiel auf welchem physikalischen HLR sich der Teilnehmerdatensatz eines bestimmten Teilnehmers befindet, enthält, sind an das NAR entsprechend hohe Anforderungen an Ausfallsicherheit und Zuverlässigkeit zu stellen. Ist nämlich kein NAR mehr verfügbar, so entspricht dies einem Ausfall aller betreffenden Netzelemente, zum Beispiel aller HLR in einem konventionellen GSM-Netz. Es kann in diesem Fall kein erfolgreicher MTC mehr durchgeführt werden, jedoch sind MOCs weiterhin möglich. Auch die Verfügbarkeit von Mehrwertdiensten und das Mobility Management sind erheblich beeinträchtigt. Aus diesen Gründen muß die Netzstruktur ein hohes Maß an zusätzlicher Sicherheit geben. So ist der Einsatz von gedoppelten Systemen in der Netzkonfiguration auch für das NAR sinnvoll.

Betrachtet man das erfindungsgemäße Verfahren im Zusammenhang mit der HLR-Planung, so ergibt sich
- Aufhebung der Zuordnung von IMSI-/MSISDN-Bereichen zu HLR
- Vermeidung virtueller Teilnehmereinträge.

Dadurch werden gewonnen:
- Entkopplung der HLR-Planung von Rufnummemzuteilungen und SIM-Karten-Produktion
- Entkopplung der Systemdatendarstellung in der MSC von der MSISDN/IMSI-Verteilung
- Erhöhung der Netzqualität durch Wegfall der häufig fehlerbehafteten virtuellen Teilnehmer.

Durch die Einführung des NARs ist somit eine Änderung der Routing-Prinzipien in einem Telekommunikationsnetz, zum Beispiel einem Mobilfunknetz, gegeben, da eine teilnehmerindividuelle Zuordnung von zum Beispiel MSISDN/IMSI zu HLR gegeben ist. Die Datenbank mit der Zuordnung ist im NAR angesiedelt und muß dementsprechend bei den Abfragen an das HLR mit einbezogen werden.

### Mobility Management

Beim Einbuchen in das betreffende Telekommunikationsnetz, zum Beispiel für ein Mobilfunknetz nach Wechseln des Aufenthaltsorts (VLR-Bereich) oder beim Wiedereinschalten des Handys wird der neue Aufenthaltsort an das HLR gemeldet, damit dort die entsprechenden Daten ggf. aktualisiert werden können. Die Identifizierung des Teilnehmers wird mittels der IMSI vorgenommen. In der Antwort sendet das HLR seine Netzadresse an das VLR. Ab diesem Zeitpunkt ist dem VLR die HLR-Adresse des Teilnehmers bekannt. Anhand dieser Netzadresse werden alle weiteren Nachrichten vom VLR direkt an das HLR gesendet. (MAP: Update-Location; IMSI; VLR → HLR)

### Call Control

Bei einem Anruf zu einem mobilen Teilnehmer (MTC) wird der aktuelle Aufenthaltsort des gerufenen Teilnehmers von der Gateway-MSC beim HLR abgefragt. Die Abfrage geschieht anhand der Teilnehmerrufnummer (MSISDN). (MAP: Send-Routing-Information; MSISDN; GMSC → HLR)

### Short Message

Bei einer Kurznachricht, die einem mobilen Teilnehmer zugestellt werden soll, muß das Short Message Service Center (SMSC) beim HLR den Aufenthaltsort des gerufenen Teilnehmers erfragen. Das NAR muß also anhand der MSISDN ermitteln, zu welchem HLR die Nachricht Send-Routing-Information-For-SM weitergeleitet werden muß. Ist der Zielteilnehmer nicht erreichbar (z. B. ausgeschaltetes Handy), so kann das SMSC beim HLR beauftragen, über die Wiedererreichbarkeit des Teilnehmers informiert zu werden, um die Kurznachricht erneut zuzustellen. (MAP: Send-Routing-Information-For-SM: MSISDN; SMSC → HLR) (MAP: Set-Message-Waiting Data; MSISDN; SMSC → HLR)

### Mehrwertdienste

Alle Aktionen, die zu Mehrwertdienste vom VLR aus in Richtung HLR durchgeführt werden, bedürfen keiner zusätzlichen Funktionen im NAR. Die zugehörigen Nachrichten werden vom VLR anhand der für den jeweiligen Teilnehmer gespeicherten Netzadresse des HLR zum entsprechenden HLR geroutet.

Alle Mehrwertdienste, die von anderen Netzelementen als dem VLR durchgeführt werden, erfordern, daß das NAR die Supplementary Service Operation zum "richtigen" HLR weiterleitet, da den anderen Netzelementen die HLR-Netzadresse zu einem bestimmten Teilnehmer nicht bekannt ist. Beispielsweise kann ein Supplementary Service z.B. auch durch ein VMSC angestoßen werden.

Über z.B. ein Voice Mail Service Center (VMSC) kann eine Administrierung von Mehrwertdiensten durch den Teilnehmer geschehen. Hierfür wird eine MAP-Schnittstelle zwischen VMSC und HLR benötigt. Da das VMSC die Netzadresse des HLR für den Teilnehmer, der seinen Mehrwertdienst bearbeitet, nicht kennt, muß das NAR die Weiterleitung der MAP-Nachricht an das HLR anhand der IMSI durchführen.

Anstelle eines VMSC kann eine gleichwertige Realisierung beispielsweise auch über eine Interactive Voice Response (IVR)-Plattform erfolgen.

### Authentication Center (Auc)

Bei einem Mobilfunknetz kann in jedem HLR auch die Funktion des AuC für die in diesem HLR gespeicherten Teilnehmerdatensätze integriert sein. Zur Durchführung der Authentisierung erfragt das VLR die notwendigen Parameter beim AuC. Da zum Zeitpunkt des ersten Einbuchens des Teilnehmers ins Netz die Netzadresse des HLR noch nicht im VLR bekannt ist, muß das NAR die Weiterleitung der MAP-Nachrichten zur Authentisierung an das HLR/AuC anhand der IMSI durchführen.
(MAPv1: Send-Parameters; IMSI; VLR → HLR/AuC)
(MAPv2: Send-Authentication-Info; IMSI; VLR → HLR/AuC)

### SIM-Karten-Handling

Es gibt Situationen, die einen Austausch der SIM-Karte eines bestehenden Teilnehmers erfordern; z.B. im Fall einer defekten SIM-Karte oder bei Einführung neuer Dienste. Gleichzeitig wollen diese Teilnehmer ihre alte Rufnummer beibehalten. Das heißt bei gleichbleibender MSISDN wird eine neue IMSI an die Teilnehmer vergeben. Das NAR, mit der Möglichkeit der flexiblen Zuordnung von MSISDN und IMSI zu Teilnehmer und HLR, verringert in erheblichem Maße die administrativen Aufwendungen, die mit einem SIM-Kartenaustausch verbunden sind (Zuordnung von IMSI zu HLR muß beibehalten werden), um virtuelle Teilnehmereinträge zu vermeiden. Ein SIM-Kartentausch tritt regelmäßig in großer Zahl auf. Ebenso muß bei Einführung eines neuen Massendienstes, der neuer SIM-Karten bedarf, bei entsprechend vielen Teilnehmern die SIM-Karte getauscht und administriert werden. Der zu erwartende Anteil der daraus entstehenden virtuellen Teilnehmereinträge ist beträchtlich.

### International Roaming

Aus dem Call Control resultieren auch im Fall von international Roaming keine speziellen Anforderungen an das NAR.

### Datenschutz

Auf dem NAR werden keine Teilnehmerdaten wie z. B. Supplementary Services, Rufumleitungsziele oder ähnliches gespeichert. Das Teilnehmerprofil bleibt weiterhin im HLR. Es sind im NAR nur die Routingdaten abgelegt, also die Information, auf welchem Netzelement die Teilnehmerdaten zu finden sind. Es resultieren daher aus dem Datenschutz keine speziellen Anforderungen an das NAR.

### Intelligent Network (IN)

So wie im HLR die Teilnehmerdaten für GSM-Dienste gespeichert sind, so werden im Service Control Point (SCP) die Teilnehmerdaten für die IN-Dienste eines Teilnehmers abgelegt. Hat man mehrere SCPs im Netz, so stellt sich auch hier für das NAR die Aufgabe herauszufinden, auf welchem SCP die Daten für einen bestimmten Teilnehmer gespeichert sind. Man muß jedoch zwei grundsätzliche Dienstetypen unterscheiden: teilnehmerindividuelle Dienste sowie netzweite Dienste.

### Teilnehmerindividuelle Dienste

Bei teilnehmerindividuellen Diensten ist es für die korrekte Ausführung des IN-Dienstes notwendig, daß die zugehörigen Teilnehmerdaten während der Laufzeit zur Verfügung stehen. Diese teilnehmerspezifischen Daten sind auf dem SCP gespeichert. Es kann nun also eine Aufgabe des NARs sein zu ermitteln, an welchen SCP die Dienstesteuerung zu übergeben ist.
(INAP: InitiaIDP, service key, calling party number (MSISDN), IMSI, IMEI) für originating Services.
(INAP: InitialDP, service key, called party number (MSISDN), IMSI, IMEI) für terminating Services wie Terminating call screening.

### Netzweite Dienste

Für netzweite Dienste sind die teilnehmerindividuellen Daten ohne Bedeutung. Dennoch muß der SCP ermittelt werden, auf dem die Dienstelogik implementiert ist. Das Routingkriterium zur Auswahl des SCPs ist dabei jedoch nicht die Rufnummer des Teilnehmers, sondern allein der Service Key.
(INAP: InitialDP, service key)

### Local Number Portability (LNP)

Wenn ein Kunde im Festnetz den Netzbetreiber wechselt, kann er seine Rufnummer beibehalten. Das tatsächliche Zielnetz des gerufenen Teilnehmers kann bereits in der Rufaufbauphase durch das Ursprungsnetz (On-Call-Query) ermittelt werden. In diesem Fall wird im Ursprungsnetz eine Datenbank abgefragt, in der die portierten Teilnehmer registriert sind. Aufgrund der zu erwartenden hohen dynamischen Last durch die Datenbankabfragen werden spezielle Anforderungen an die Leistungsfähigkeit der Datenbank gestellt. Diese LNP-Datenbank könnte im NAR realisiert werden.

### Mobile Number Portability (MNP)

Zur Zeit wird bei ETSI die Standardisierung von MNP bearbeitet. Es zeichnet sich ab, daß zwei Varianten zur Implementation zur Auswahl gestellt werden. Eine Variante basiert auf dem Protokoll MAP und die andere auf dem Protokoll INAP. Nach abgeschlossener Standardisierung bei ETSI sind die Anforderungen an das NAR für das Call Control, das Mobility Management und das Supplementary Service Handling (z.B. für CCBS) herauszuarbeiten.

### Optimized Voicemail-Routing

Aus Kapazitätsgründen sind mehrere Voice Mail Service Centre im Mobilfunknetz im Einsatz. Die Aufteilung der Teilnehmer auf die Systeme ist derzeit rufnummernorientiert. Eine wirtschaftlichere Aufteilung kann erzielt werden, wenn man den Standort des Voicemailsystems möglichst nah an den häufigsten Aufenthaltsort des Teilnehmers legt. Dies bedeutet eine teilnehmerindividuelle Zuordnung anstatt einer blockweisen Zuordnung. Damit entstehen vergleichbare Anforderungen an das NAR wie sie sich aus dem HLR ergeben.

### Equipment Identity Register (EIR)

Das NAR kann gegebenenfalls anhand der IMEI entscheiden, zu welchem EIR die Abfrage gesendet werden muß. Aktuell kann in der MSC nur die Adresse eines EIRs eingetragen werden. Eine Aufteilung des Routings nach IMEI-Blökken ist nicht vorgesehen. Dies würde bedeuten, daß in jedem EIR alle IMEIs gespeichert sein müßten, was aus dem Gesichtspunkt der Datenkonsistenz nicht wünschenswert ist. Das Routing zum jeweiligen EIR könnte regional aufgeteilt werden. Mit einem NAR im Netz könnte das Routing anhand der IMEI realisiert werden, so daß in jedem EIR nur ein Teil der als gestohlen gemeldeten IMEls abgelegt sein müßten. Eine mögliche Dateninkonsistenz kann damit ausgeschlossen werden.
(MAP: Check-IMEI, IMEI)

### Teilnehmeradministration

Als Erweiterung der Funktionalität des NARs soll es aus Sicht des ABC wie ein einzelnes "single-HLR" reagieren. Alle Aktivierungen/Änderungen werden nur noch an das NAR gesendet und dieses wählt dann ein passendes HLR aus und sendet die Nachricht an das physikalische HLR weiter.

Besonders hervorzuheben ist nochmals der Nutzen aus der Anwendung des NARs als HLR-Router. Durch die Einführung des NAR können in den oben genannten Bereichen viele Aufgaben effizienter gelöst werden. Die daraus resultierenden Einsparungen bei den Kosten stehen den zusätzlichen Aufwendungen gegenüber, die aus der Einführung eines neuen Netzelementes, dem NAR resultieren. Neben der Kosteneinsparung kommt es durch eine optimierte Kapazitätsauslastung der jeweiligen Netzelemente, zum Beispiel der bestehenden HLRs, auch zu Einsparungen in zukünftigen Investitionen für solche Netzelemente, zum Beispiel in HLR.

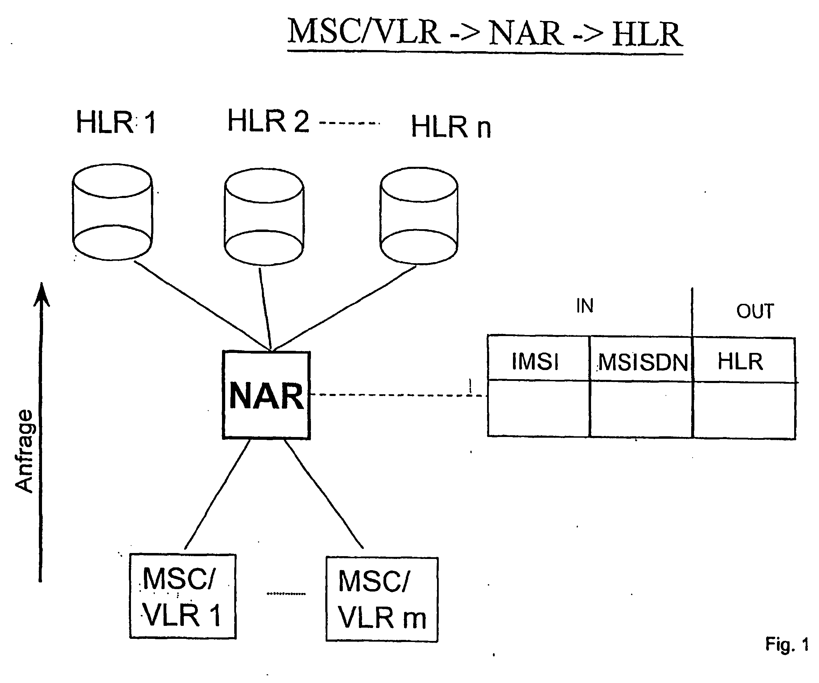

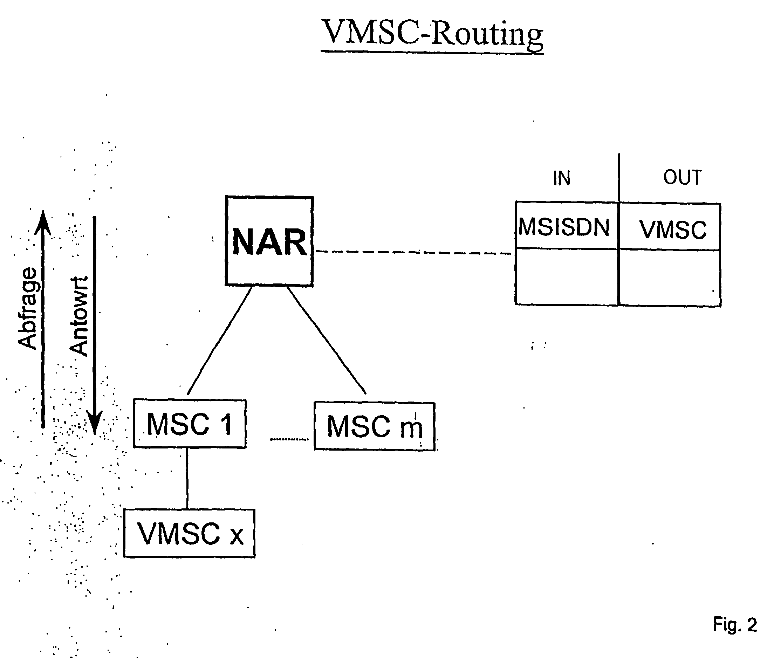

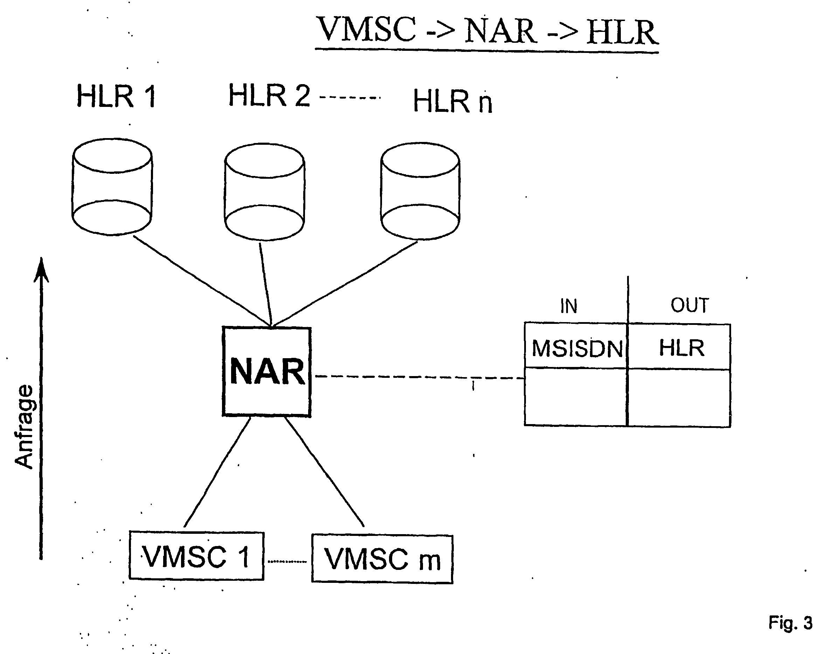

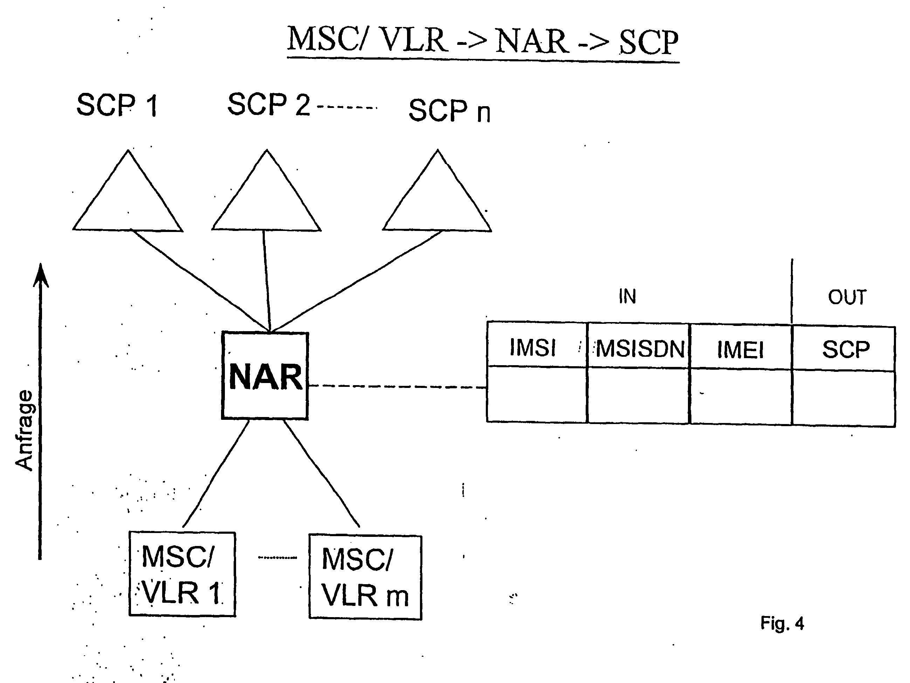

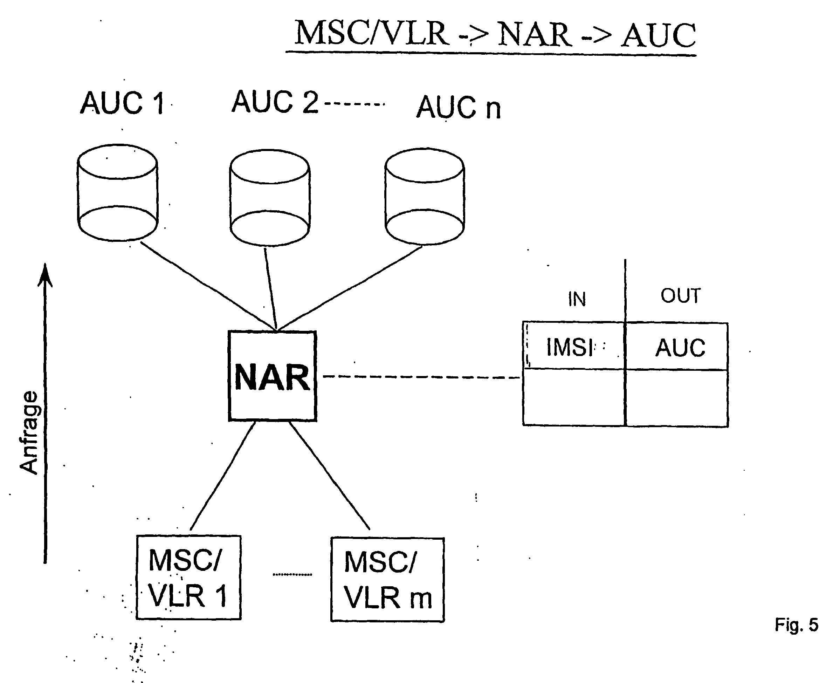

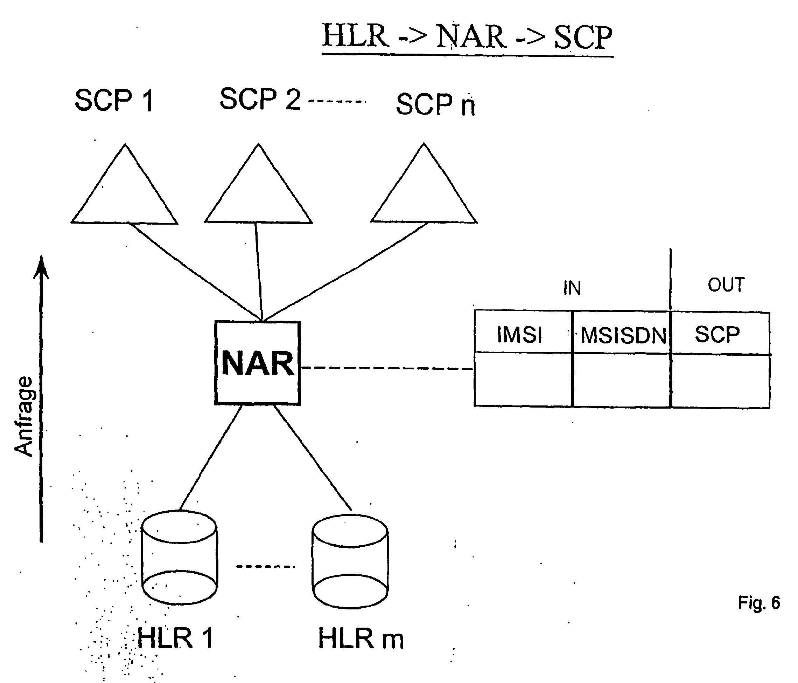

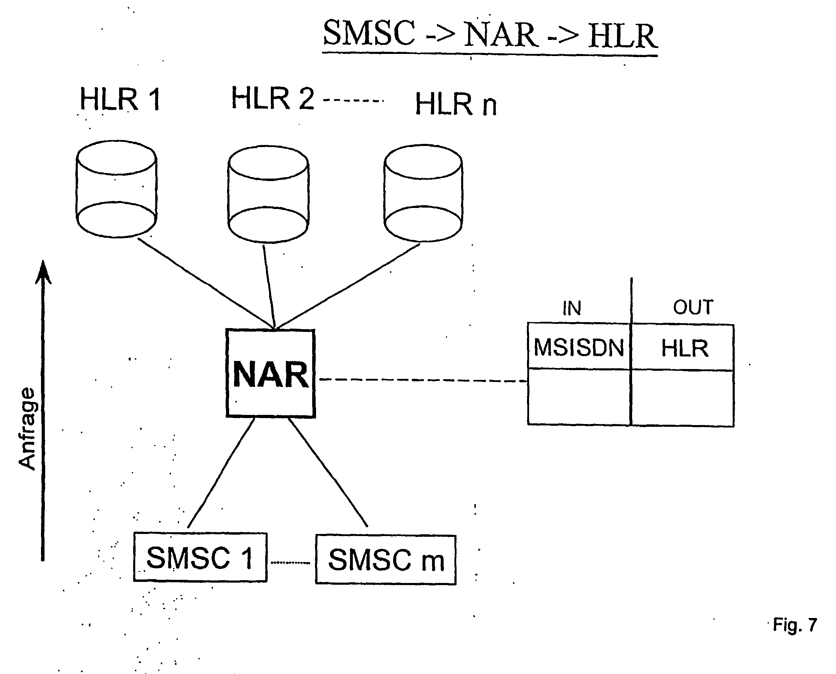

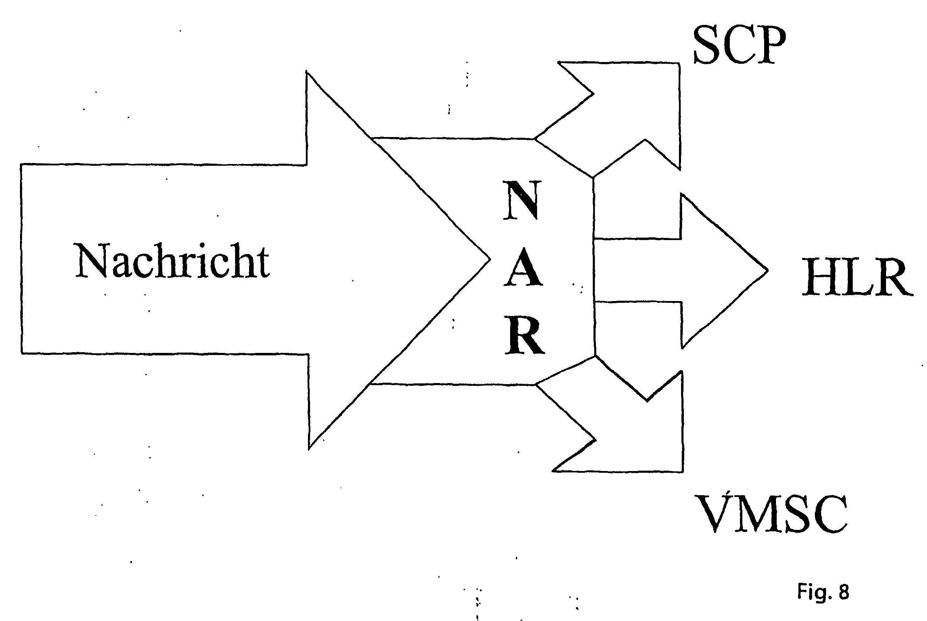

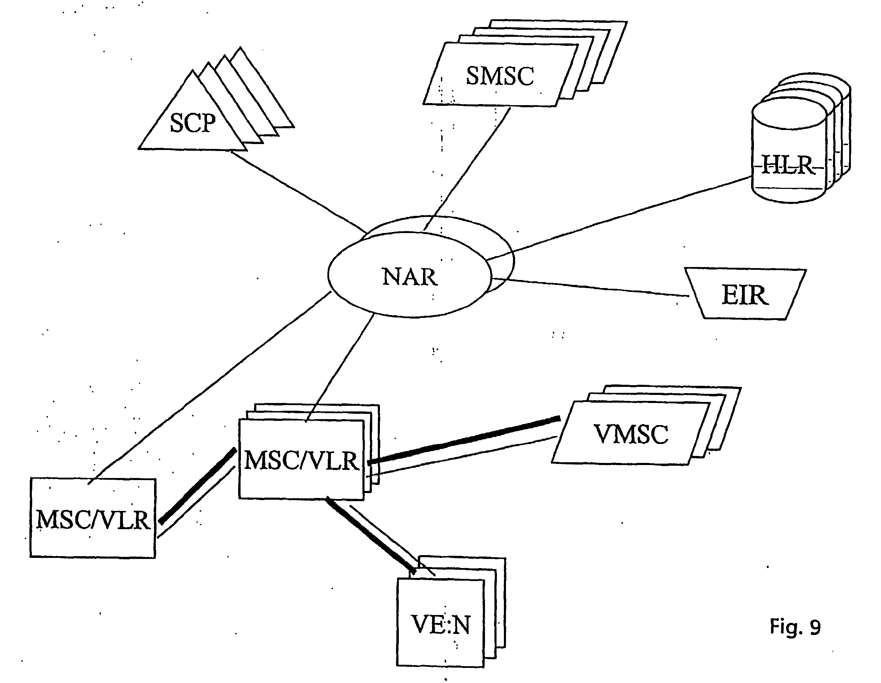

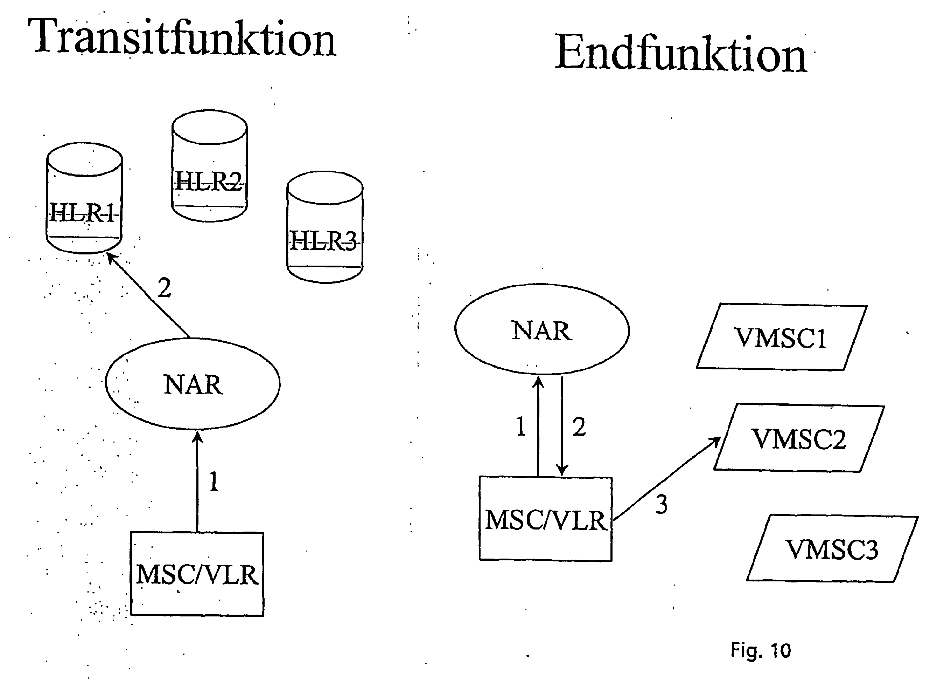

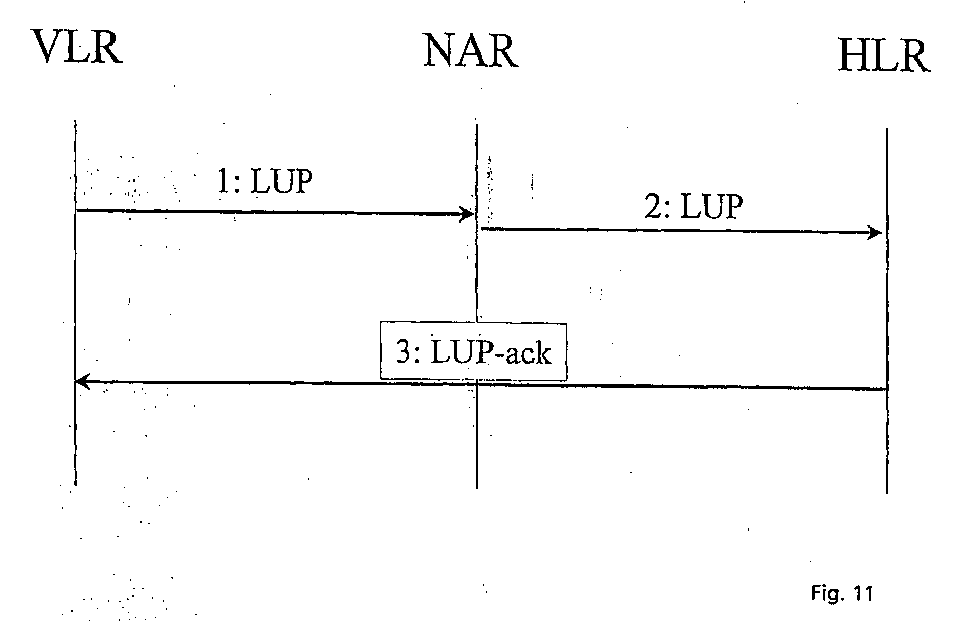

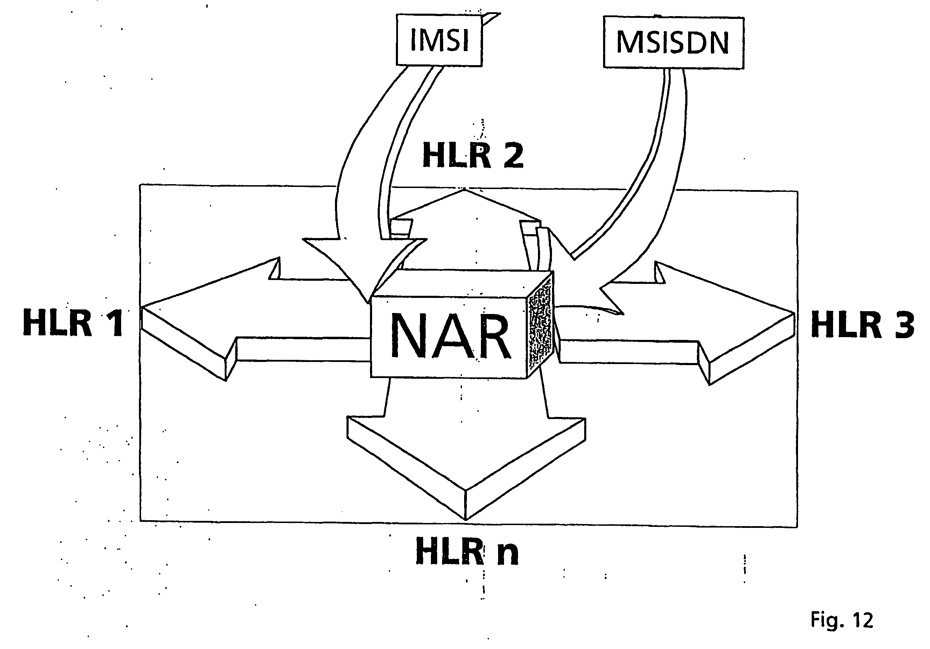

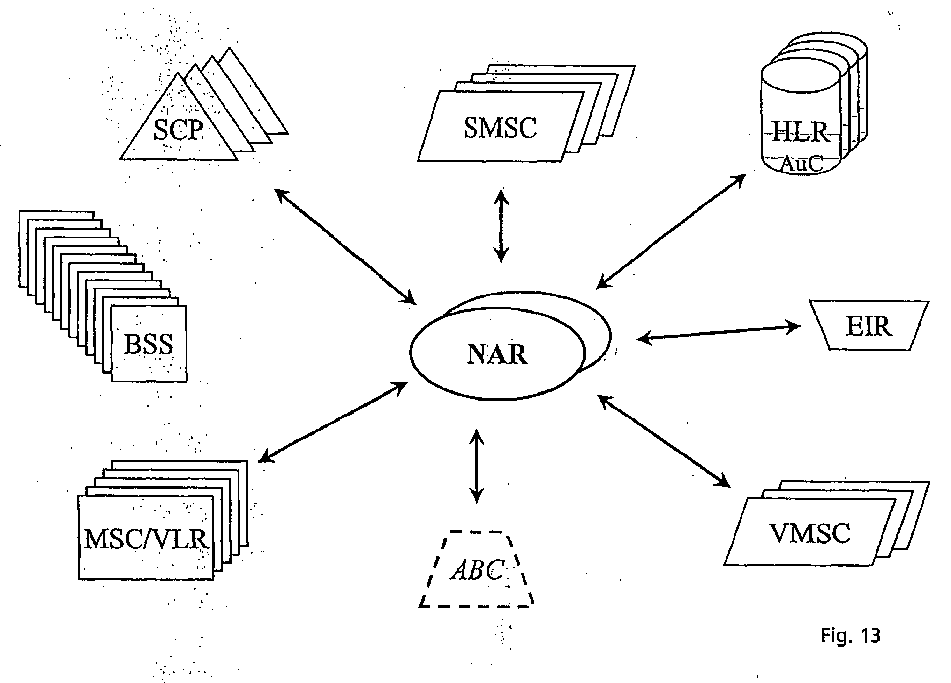

In den Fig. 1 bis 13 ist das erfindungsgemäße Verfahren anhand verschiedener Ausführungsformen beispielsweise und schematisch veranschaulicht. Es zeigen:
- Fig. 1: Das erfindungsgemäße Verfahren in Anwendung auf den Nachrichtenfluß MSCNLR → NAR → HLR:
- Auswahlkriterium MSISDN:
   - Mobile Terminating Call (MTC)
   - Supplementary Service Handling
- Auswahlkriterium IMSI:
   - Location Update (Einbuchen);
- Fig. 2: das erfindungsgemäße Verfahren in Anwendung auf den Nachrichtenfluß MSC → NAR → MSC → VMSC:
- Auswahlkriterium MSISDN:
   - Mobile Originating Call (VMSC-Abfrage)
   - Forwarded Call;
- Fig. 3: das erfindungsgemäße Verfahren in Anwendung auf den Nachrichtenfluß VMSC → NAR → HLR:
- Auswahlkriterium MSISDN:
   - Supplementary Service Handling;
- Fig. 4: das erfindungsgemäße Verfahren in Anwendung auf den Nachrichtenfluß MSC/VLR → NAR → SCP:
- Auswahlkriterium MSISDN:
   - Mobile Terminating Call (MTC)
   - Mobile Originating Call (MOC)
   - Supplementary Service Handling
- Auswahlkriterium IMSI:
   - Location Update (Einbuchen)
- Auswahlkriterium IMEI:
   - Fraud Control;
- Fig. 5: das erfindungsgemäße Verfahren in Anwendung auf den Nachrichtenfluß MSC/VLR → NAR → AUC:
- Auswahlkriterium IMSI:
   - Authentisierung;
- Fig. 6: das erfindungsgemäße Verfahren in Anwendung auf den Nachrichtenfluß HLR → NAR → SCP:
- Auswahlkriterium MSISDN:
   - Supplementary Service Handling
- Auswahlkriterium IMSI:
   - Location Update;
- Fig. 7: das erfindungsgemäße Verfahren in Anwendung auf den Nachrichtenfluß SMSC → NAR → HLR:
- Auswahlkriterium MSISDN:
   - Supplementary Service Handling;
- Fig. 8: das NAR als zentraler Nachrichtenverteiler;
- Fig. 9: das NAR im Signalisierungsnetz;
- Fig. 10: Transit- und Endfunktion des NAR;
- Fig. 11: der Nachrichtenfluß VLR, NAR und HLR;
- Fig. 12: das NAR als HLR-Router und
- Fig. 13: das NAR im GSM-Netz.

In der Zeichnung sind die verschiedenen Anwendungsmöglichkeiten des erfindungsgemäßen Verfahrens dargestellt und mit den international gebräuchlichen Bezeichnungen beschrieben worden. Alle Einzelanwendungen können in einem Telekommunikationsnetz, zum Beispiel einem GSM-Mobilfunknetz, verwirklicht werden.

Es können die verschiedenen Verfahrensweisen auch einzeln oder aber insgesamt in ein- und demselben Telekommunikationsnetz oder in mehreren, zum Beispiel in zwei miteinander korrespondierenden Mobilfunknetzen und/oder in einem oder mehreren Mobilfunknetzen im Zusammenhang mit einem oder mehreren Festnetzen zur Anwendung gelangen.

### Literaturverzeichnis

WALKE, B.: Mobilfunknetze und ihre Protokolle, Band 1, Verlag B.G. Teubner Stuttgart, ISBN 3-519-06430-8, 1998 (vom DPMA im September 1998 gekauft), p. 295-311

TANENBAUM, ANDREW, S.: Computemetzwerke, 3. Revidierte Auflage, Prentice Hall, ISBN 3-8272-9568-8, 1998 (vom DPMA im Juli 1998 gekauft), Kapitel 1.2.3, Seite 28 - 30
DE 195 15 558 C1
WO 98/44640
WO 98/28920

### Abkürzungsverzeichnis

- ABC: Administration and Billing Center
- AuC: Authentication Center
- BSS: Base Station Subsystem
- CAP: CAMEL Application Part
- CCBS: Call Completion to Busy Subscriber
- CSC: Customer Service Center
- DPC: Destination Point Code
- DTAG: Deutsche Telekom AG
- EIR: Equipment Identity Register
- ETSI: European Telecommunications Standards Institute
- GMSC: Gateway Mobile Services Switching Center
- GPRS: General Packet Radio Service
- GSM: Global System for Mobile Communications
- HLR: Home Location Register
- IMEI: International Mobile Equipment Identity
- IMSI: International Mobile Subscriber Identity
- IN: Intelligent Network
- INAP: Intelligent Network Application Part
- ISDN: Integrated Services Digital Network
- LNP: Local Number Portability
- MAP: Mobile Application Part
- MD: Mediation Device
- MNP: Mobile Number Portability
- MOC: Mobile Originated Call
- MSC: Mobile services Switching Center
- MSISDN: Mobile Station ISDN number
- MTP: Message Transfer Part
- MTC: Mobile Terminated Call
- NAR: Network Address Register
- NMC: Network Management Center
- OMC: Operation and Maintenance Center
- OPC: Originating Point Code
- PSTN: Public Switched Telephone Network
- SCCP: Signalling Connection Control Part
- SCP: Service Control Point
- SDF: Service Data Function
- SIM: Subscriber Identity Module
- SMS: Short Message Service
- SMSC: Short Message Service Center
- SSP: Service Switching Point
- SPC: Signalling Point Code
- STP: Signalling Transfer Point
- TC: Transaction Capabilities
- UMTS: Universal Mobile Telecomunications System
- VASS: Value Added Services System
- VE:N: Vermittlungseinrichtung Netzübergang
- VLR: Visitor Location Register
- VMSC: Voice Mail Service Center

- HPLMN: HomePublicLandMobileNetwork
- Initial DP: Initial Detection Point
- LUP: Location Update Procedure
- SRI: Send Routing Information

## Patentansprüche

1. Verfahren zum Routen von Nachrichten in mindestens einem Telekommunikationsnetz nach GSM-Standard mit einem oder mehreren Netzelementen mit teilnehmerspezifischen Daten, wobei in dem Telekommunikationsnetz wenigstens ein als Netzelement ausgebildetes Network Address Register (NAR) mit Routingdaten angeordnet wird, das unter Vermeidung von Blockbildung von Nummernbereichen individuell ein bestimmtes Netzelement oder mehrere bestimmte Netzelemente (z.B. HLR, AUC, EIR, VMSC, SCP) anhand eines teilnehmerspezifischen Merkmals (z.B. MSISDN, IMSI, IMEI) ermittelt und eine jeweilige Nachricht dahin weiterleitet, oder eine oder mehrere Netzelement-Adressen ermittelt und diese als Routing-Informationen an ein abfragendes System zurückgibt und durch das abfragende System diese Nachricht an das bestimmte Netzelement bzw. die bestimmten Netzelemente weitergegeben wird.

2. Verfahren nach Anspruch 1, **dadurch gekennzeichnet, dass** sich ein GSM-Teilnehmer einbucht, wobei das MSCNLR die IMSI des einbuchenden Teilnehmers an das NAR sendet und das NAR anhand der IMSI die Adresse des zugehörigen HLR ermittelt, in dem die Teilnehmerdaten des sich einbuchenden Teilnehmers abgespeichert sind, woraufhin das zugehörige HLR direkt an das abfragende MSCNLR antwortet.

3. Verfahren nach Anspruch 1 oder 2, **dadurch gekennzeichnet, dass** der GSM-Teilnehmer angerufen wird und das MSC/VLR die Rufnummer des GSM-Teilnehmers (MSISDN) zum NAR sendet und das NAR anhand der MSISDN die Adresse des zugehörigen HLR ermittelt, in dem die Teilnehmerdaten gespeichert sind, und dass das zugehörige ermittelte HLR dann direkt an das abfragende MSCNLR antwortet.

4. Verfahren nach Anspruch 1 oder einem der darauffolgenden Ansprüche, **dadurch gekennzeichnet, dass** ein Teilnehmer seinen Anrufbeantworter (Voicemailbox) abfragt, wobei die MSC die MSISDN des abfragenden Teilnehmers zum NAR sendet und das NAR anhand der MSISDN die Adresse des zugehörigen VMSC ermittelt und diese Adresse an das abfragende MSC zurücksendet, woraufhin das MSC den Verkehrskanal zu diesem zugehörigen VMSC aufbaut, woraufhin die Voicemailbox abhörbar ist.

5. Verfahren nach Anspruch 1 oder einem der darauffolgenden Ansprüche, **dadurch gekennzeichnet, dass** das zugehörige VMSC die Rufnummer des GSM-Teilnehmers (MSISDN) zum NAR sendet, wobei das NAR anhand der MSISDN die Adresse des zugehörigen HLR ermittelt, in dem die Teilnehmerdaten gespeichert sind, und das zugehörige ermittelte HLR dann direkt an das abfragende VMSC antwortet.

6. Verfahren nach Anspruch 1, **dadurch gekennzeichnet, dass** das MSC/VLR die IMEI des verwendeten Mobilfunkgerätes zum NAR sendet, wobei das NAR anhand der IMEI die Adresse des zugehörigen SCP ermittelt und an den SCP weitersendet.

7. Verfahren nach Anspruch 1, **dadurch gekennzeichnet, dass** beim Einbuchen des Teilnehmers das MSC/VLR die IMSI an das NAR sendet, wobei das NAR anhand der IMSI den zugehörigen SCP ermittelt und dann die Anfrage an den SCP weiterleitet und der SCP dann direkt an das MSC/VLR antwortet.

8. Verfahren nach Anspruch 1, **dadurch gekennzeichnet, dass** das MSC/VLR die MSISDN des angerufenen Teilnehmers an das NAR sendet und das NAR anhand der MSISDN den zugehörigen SCP ermittelt und die Anfrage an diesen SCP weiterleitet und der SCP direkt an das MSC/VLR antwortet.

9. Verfahren nach Anspruch 1, **dadurch gekennzeichnet, dass** das MSC/VLR die IMSI des zu authentisierenden Teilnehmers an das NAR sendet und das NAR anhand der IMSI das zugehörige AUC ermittelt und die Anfrage direkt an dieses AUC weiterleitet und das AUC direkt an das MSC/VLR antwortet.

10. Verfahren nach Anspruch 1, **dadurch gekennzeichnet, dass** beim Einbuchen eines Teilnehmers das HLR die IMSI an das NAR sendet und das NAR anhand der IMSI den zugehörigen SCP ermittelt und an diesen SCP weiterleitet, der dann dem HLR antwortet.

11. Verfahren nach Anspruch 1, **dadurch gekennzeichnet, dass** bei der Rufumleitung das HLR die MSISDN zum NAR sendet und das NAR anhand der MSISDN den zugehörigen SCP ermittelt und die Anfrage an diesen SCP weiterleitet und das SCP direkt dem abfragenden HLR antwortet.

12. Verfahren nach Anspruch 1, **dadurch gekennzeichnet, dass** das SMSC die MSISDN zum NAR sendet und das NAR anhand der MSISDN die Adresse des zugehörigen HLR, in dem die Teilnehmerdaten gespeichert sind, ermittelt, und die ursprüngliche Nachricht an das ermittelte HLR weiterleitet und das zugehörige HLR direkt dem abfragenden SMSC antwortet.

## Claims

1. Method for routing messages in at least one telecommunications network according to the GSM standard with one or more network elements with subscriber-specific data and in the telecommunications network at least one network address register (NAR) designed as a network element is arranged with routing data, which network element, while avoiding the formation of blocks of number ranges, individually determines with the aid of a subscriber-specific feature (e.g. MSISDN, IMSI, IMEI) a specific network element or a number of specific network elements (e.g. HLR, AUC, EIR, VMSC, SCP) and relays a message to it or them or determines one or more network element addresses and relays these back as routing information to an interrogating system, and this message is relayed by the interrogating system to the specific network element or specific network elements.

2. Method in accordance with claim 1, **characterised in that** a GSM subscriber logs in and the MSC/VLR sends to the NAR the IMSI of the subscriber logging in and the NAR determines with the aid of the MSISDN the address of the associated HLR in which the subscriber data are stored, whereupon the associated determined HLR then answers the interrogating MSC/VLR direct.

3. Method in accordance with claim 1 or 2, **characterised in that** the GSM subscriber is called and the MSC/VLR sends the telephone number of the GSM subscriber (MSISDN) to the NAR and the NAR determines with the aid of the MSISDN the address of the associated HLR in which the subscriber data are stored and that the associated determined HLR then answers the interrogating MSC/VLR direct.

4. Method in accordance with claim 1 or any of the claims following it, **characterised in that** a subscriber interrogates his voice mail box by and the MSC sends the MSISDN of the interrogating subscriber to the NAR and the NAR determines with the aid of the MSISDN the address of the associated VMSC and sends this address back to the interrogating MSC, whereupon the MSC builds up the traffic channel to this associated VMSC, whereupon the voice mail box can be listened to.

5. Method in accordance with claim 1 or any of the claims following it, **characterised in that** the associated VMSC sends the telephone number of the GSM subscriber (MSISDN) to the NAR and the NAR determines with the aid of the MSISDN the address of the associated HLR in which the subscriber data are stored and the associated determined HLR then answers the interrogating VMSC direct.

6. Method in accordance with claim 1, **characterised in that** the MSC/VLR sends the IMEI of the mobile telephone being used to the NAR and the NAR determines with the aid of the IMSI the address of the associated SCP and relays it to the SCP.

7. Method in accordance with claim 1, **characterised in that** that**,** when the subscriber logs in, the MSC/VLR sends the IMSI to the NAR, where the NAR determines with the aid of the IMSI the associated SCP and then relays the enquiry to the SCP and the SCP then answers the MSC/VLR direct.

8. Method in accordance with claim 1, **characterised in that** the MSC/VLR sends to the NAR the MSISDN of the subscriber called and the NAR determines with the aid of the MSISDN the associated SCP and relays the enquiry to this SCP and the SCP answers the MSC/VLR direct.

9. Method in accordance with claim 1, **characterised in that** the MSC/VLR sends to the NAR the IMSI of the subscriber to be authenticated and the NAR determines with the aid of the IMSI the associated AUC and relays the enquiry direct to this AUC and the SUC answers direct to the MSC/VLR.

10. Method in accordance with claim 1, **characterised in that** that**,** when a subscriber logs in, the HLR sends the IMSI to the NAR and the NAR determines with the aid of the IMSI the associated SCP and then relays it to this SCP and the SCP which then answers the HLR.

11. Method in accordance with claim 1, **characterised in that,** while the call is being rerouted, the HLR sends the MSISDN to the NAR and the NAR determines with the aid of the MSISDN the associated SCP and relays the enquiry to this SCP and the SCP answers the interrogating HLR direct.

12. Method in accordance with claim 1, **characterised in that** the SMSC sends to the NAR the MSISDN and the NAR determines with the aid of the MSISDN the address of the associated HLR in which the subscriber data are stored and relays the original message to the determined HLR and the associated HLR answers the interrogating SMSC direct.

## Revendications

1. Méthode pour diriger des messages dans au moins un réseau de télécommunications en fonction du standard GSM, avec un ou plusieurs éléments de réseau contenant des données spécifiques des participants, sachant que dans le réseau de télécommunications au moins un Network Adress Register (NAR) contenant des données de routage et configuré en tant qu'élément de réseau, détermine individuellement, en évitant la formation de blocs de domaines de numéros, un élément de réseau précis ou plusieurs éléments de réseau précis (par ex. HLR, AUC, EIR, VMSC, SCP) à l'aide d'une propriété spécifique à un abonné (par ex. MSISDN, IMSI, IMEI) et qu'il retransmet là-bas un message respectif, ou détermine une ou plusieurs adresse(s) d'élément(s) de réseau et les restitue à un système interrogateur, et en ce le système interrogateur retransmet ce message à l'élément de réseau précis et aux éléments de réseau précis.

2. Méthode selon la revendication 1, **caractérisée en ce qu'**un abonné GSM s'enregistre, sachant que le MSC/VLR envoie l'IMSI de l'abonné s'enregistrant au NAR et que le NAR, à l'aide de l'IMSI, détermine l'adresse du HLR afférent dans lequel sont mémorisées les données de l'abonné en train de s'enregistrer, ce après quoi le HLR afférent répond directement au MSC/VLR interrogateur.

3. Méthode selon la revendication 1 ou 2, **caractérisée en ce que** l'abonné GSM est appelé et que le MSC/VLR envoie le numéro d'appel de l'abonné GSM (MSISDN) au NAR et que le NAR, à l'aide de la MSISDN, détermine l'adresse du HLR afférent dans lequel les données de l'abonné sont mémorisées, et **en ce que** le HLR afférent déterminé répond ensuite directement au MSC/VLR interrogateur.

4. Méthode selon la revendication 1 ou l'une des revendications suivantes, **caractérisée en ce qu'**un abonné consulte son répondeur (boîte vocale), sachant que la MSC envoie la MSISDN de l'abonné interrogateur au NAR et que le NAR, à l'aide de la MSISDN, détermine l'adresse du VMSC afférent et renvoie cette adresse au MSC interrogateur, ce après quoi le MSC établit le canal de circulation vers ce VMSC afférent, ce après quoi il est possible d'écouter le contenu de la boîte vocale.

5. Méthode selon la revendication 1 ou l'une des revendications suivantes, **caractérisée en ce que** le VMSC afférent envoie le numéro d'appel de l'abonné GSM (MSISDN) au NAR, sachant que le NAR, à l'aide de la MSISDN, détermine l'adresse du HLR afférent dans lequel les données de l'abonné sont mémorisées, et le HLR afférent déterminé répond ensuite directement au VMSC interrogateur.

6. Méthode selon la revendication 1, **caractérisée en ce que** le MSC/VLR envoie au NAR l'IMEI de l'appareil de téléphonie mobile utilisé, sachant que le NAR, à l'aide de l'IMEI, détermine l'adresse du SCP afférent et retransmet vers le SCP.

7. Méthode selon la revendication 1, **caractérisée en ce que** lors de l'enregistrement de l'abonné, le MSC/VLR envoie l'IMSI au NAR, sachant que le NAR, à l'aide de l'IMSI, détermine le SCP afférent puis retransmets la demande au SCP et que le SCP répond ensuite directement au MSC/VLR.

8. Méthode selon la revendication 1, **caractérisée en ce que** le MSC/VLR envoie la MSISDN de l'abonné appelé au NAR et que le NAR, à l'aide de la MSISDN, détermine le SCP afférent et transmet la demande à ce SCP et **en ce que** le SCP répond directement au MSC/VLR.

9. Méthode selon la revendication 1, **caractérisée en ce que** le MSC/VLR envoie au NAR l'IMSI de l'abonné à authentifier et que le NAR, à l'aide de l'IMSI, détermine l'AUC afférente et retransmet la demande directement à cet AUC, et **en ce que** l'AUC répond directement au MSC/VLR.

10. Méthode selon la revendication 1, **caractérisée en ce que** lors de l'enregistrement d'un abonné, le HLR envoie l'IMSI au NAR et que le NAR, à l'aide de l'IMSI, détermine le SCP afférent et retransmet ensuite à ce SCP qui répond ensuite au HLR.

11. Méthode selon la revendication 1, **caractérisée en ce que** lors de la déviation d'appel, le HLR envoie la MSISDN au NAR et que le NAR, à l'aide de la MSISDN, détermine le SCP afférent et retransmet la demande à ce SCP et **en ce que** le SCP répond directement au HRL interrogateur.

12. Méthode selon la revendication 1, **caractérisée en ce que** le SMSC envoie la MSISDN au NAR et que le NAR, à l'aide de la MSISDN, détermine l'adresse du HLR afférent dans lequel sont mémorisées les données de l'abonné et retransmet le message d'origine au HLR déterminé, et **en ce que** le HLR afférent répond directement au SMSC interrogateur.
